# EUROPÄISCHE PATENTSCHRIFT

(11) **EP 2 687 083 B1**
(45) Veröffentlichungstag und Bekanntmachung des Hinweises auf die Patenterteilung: **06.09.2017**
(21) Anmeldenummer: 13002922.6
(22) Anmeldetag: 06.06.2013
(51) Int. Cl.: A01F 15/08, A01F 15/07

(54) **Ballenpresse**
Baling press
Presse à empaqueter

(30) Priorität: 17.07.2012 DE 202012006898 U
(43) Veröffentlichungstag der Anmeldung: 22.01.2014
(73) Patentinhaber: PÖTTINGER Landtechnik GmbH, 4710 Grieskirchen (AT)
(72) Erfinder: Kleesadl, Johann, 4181 Oberneukirchen (AT)
(74) Vertreter: Thoma, Michael

(56) Entgegenhaltungen:
- EP-A1- 0 497 539
- EP-A1- 2 269 440
- DE-A1- 3 941 707
- DE-U1- 8 329 151
- US-A- 4 135 352
- US-A- 4 510 741
- US-A- 6 079 324
- US-B1- 7 640 852

## Beschreibung

Die vorliegende Erfindung betrifft eine Ballenpresse mit einer vorzugsweise voll- oder teilvariablen Ballenformkammer, in der halm- und/oder blattförmiges Erntegut oder ähnliches Pressgut zu Ballen form- und/oder pressbar ist, wobei der Ballenformkammer durch einen in die Ballenformkammer mündenden Zuführkanal, in dem eine Förder- und/oder Schneidvorrichtung angeordnet ist, das Ernte- und/oder Pressgut zuführbar ist, wobei im Übergangsbereich von Zuführkanal und Ballenformkammer zumindest eine antreibbare Starterwalze zum Starten der Ballenformung vorgesehen ist.

Ballenpressen sind im landwirtschaftlichen Bereich in verschiedenen Bauformen bekannt, insbesondere in Form von Rundballenpressen mit variabler oder fester Ballenkammer, bei denen der Ballenkammer eine Mehrzahl von Umlenkwalzen zugeordnet sind. Bei variablen Ballenkammern werden hierbei oft Endlosriemen, Riemen mit Riemenverbindern oder Stabkettenelevatoren eingesetzt, die mit zunehmender Ernteguteinspeisung in den Ballenraum einen zunehmend größeren Ballenraumdurchmesser bzw. -umfang abbilden. Bei derartigen Ballenpressen werden die Umlenkwalzen zur Umlenkung der Riemen bzw. der Stabketten, aber auch unmittelbar zur Erntegutumlenkung eingesetzt und können im Ballenraum selbst, aber auch außerhalb angeordnet sein. Andererseits werden bei festen Ballenkammern die Umlenkrollen auch ohne derartige Riemen oder Stabketten entlang des Umfangs der Ballenkammer verteilt angeordnet, um unmittelbar mit den Umlenkwalzen das eingespeiste Erntegut zu Ballen zu pressen.

Eine bekannte Ballenpresse der eingangs genannten Art zeigt beispielsweise die DE 103 45 031 A1, bei der im Übergangsbereich zwischen Zuführkanal und Ballenformkammer eine ständig angetriebene Starterwalze angeordnet ist, um das in die Ballenformkammer eintretende Pressgut weiter anzutreiben bzw. in der gewünschten Einlaufrichtung an den Wandungen der Formkammer entlang in die Formkammer hineinzufördern. Diese zusätzliche Förderwirkung der Starterwalze ist insbesondere zu Beginn des Ballenformvorgangs hilfreich, wenn das in die Ballenformkammer eintretende Erntegut bzw. Pressgut sozusagen noch nicht weiß, wohin es sich bewegen soll bzw. von den umlaufenden Umschlingungsmitteln noch nicht ausreichend mitgenommen wird. In dem besagten Übergangsbereich findet das einlaufende Pressgut ein im Vergleich zum Durchtrittsspalt des Zuführkanals vergrößertes Volumen vor, in das das Pressgut expandieren kann, so dass am Beginn des Formvorgangs, wenn besagtes Volumen noch nicht vollständig mit Pressgut befüllt ist, zu einer noch nicht ausreichenden Umschlingungswirkung bzw. Führung durch die umlaufenden Umschlingungsmittel kommen kann.

Je nach Ballendurchmesser und Hangneigung und damit einhergehend einer Neigung der Ballenpresse verlagert sich das Gewicht bzw. der Schwerpunkt des sich bildenden und immer größer werdenden Ballens vom Mündungsbereich des Zuführkanals weg weiter zum Heck bzw. zu dem vom Mündungskanal abgewandten Ende der Ballenformkammer, wodurch die antreibende Funktion der Starterwalze zusehends abnimmt. Andererseits wird die Belastung für die Heckklappe bzw. die dem Zuführkanal gegenüberliegende Kammerwandung und für den Antrieb der Umlenk- bzw. Förderelemente in der Heckklappe bzw. in besagtem Wandungsabschnitt gegenüber dem Zuführbereich stark erhöht. Dies kann einerseits zu einer unregelmäßigen Ballenbildung, andererseits aber auch zu einer Überlastung der heckseitigen Antriebselemente führen.

Aus den Schriften US 6,079,324 und EP 2 269 440 A1 sind weitere Rundballenpressen bekannt, bei denen am unteren Rand des Einlaufbereiches der Ballenformkammer jeweils eine Starterwalze vorgesehen ist. Aus der Schrift DE 39 41 707 A1 ist eine Ballenpresse bekannt, bei der am unteren Einlauf der Ballenformkammer zwei hintereinander angeordnete Starterwalzen vorgesehen sind und angetrieben werden. Aus den Schriften US 4,135,352 und EP 0 497 539 A1 sind ferner Ballenpressen bekannt, bei denen am unteren Rand des Einlaufbereiches drei bzw. vier Starterwalzen vorgesehen sind. Eine weitere Ballenpresse zeigt die Schrift US 4,510,741.

Der vorliegenden Erfindung liegt die Aufgabe zugrunde, eine verbesserte Ballenpresse der eingangs genannten Art zu schaffen, die einen oder mehrere Nachteile des Standes der Technik vermeidet und Letzteren in vorteilhafter Weise weiterbildet. Insbesondere soll eine verlässlichere, gleichmäßige Ballenformung erreicht und Überlastungen des Heckklappenbereichs und der dort vorgesehenen Umlenk- und Formelemente und deren Antriebe vermieden werden.

Erfindungsgemäß wird diese Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, mehrere Starterwalzen vorzusehen und derart anzuordnen, dass auch bei sich vom Schwerpunkt her verlagernden bzw. größer werdenden Ballen zumindest eine der mehreren Starterwalzen voll funktionsfähig bleibt und in ausreichendem Eingriff mit dem sich bildenden Ballen bleibt, um diesen antreiben zu können. Erfindungsgemäß besitzt die Ballenpresse zumindest zwei in Einlaufrichtung des Ernteguts hintereinander angeordnete, feststehende Starterwalzen, von denen zumindest eine antreibbar ausgebildet ist. Die genannten Starterwalzen können hierbei in der Ballenformkammer bzw. im Übergangsbereich zwischen dem Zuführkanal und der Ballenformkammer angeordnet sein, insbesondere in Einlaufrichtung betrachtet im Anschluss an den Mündungsbereich des Zuführkanals am Boden der Ballenformkammer, wobei die genannten Starterwalzen insbesondere im feststehenden Teil der Ballenformkammer vorgesehen sein können. Durch die in Einlaufrichtung hintereinander angeordneten mehreren Starterwalzen kann sichergestellt werden, dass auch bei einem immer größer werdenden, sich hinsichtlich des Schwerpunkts vom Mündungsbereich des Zuführkanals immer weiter weg verlagernden Ballen zumindest die zweite oder eine weitere Starterwalze in ausreichendem Eingriff mit dem Ballen steht, um die antreibende Funktion der Starterwalze sicherzustellen. Hierdurch werden übermäßige Belastungen im Heckbereich bzw. dem dem Zuführkanal gegenüberliegenden Wandungsabschnitt der Ballenpresse vermieden.

In Weiterbildung der Erfindung können auch mehr als zwei Starterwalzen vorgesehen sein, insbesondere in Einlaufrichtung hintereinander angeordnet sein, beispielsweise drei oder vier Starterwalzen. Je nach Größe und Konfiguration der Ballenformkammer kann die Anzahl der Starterwalzen angepasst werden, wobei ein guter Kompromiss aus sicherstellen der antreibenden Funktion bei größer werdenden Ballen einerseits und ausreichendem Ballendruck zu Beginn des Formvorgangs durch entsprechend kleine Kammerkonfiguration andererseits mit zwei Starterwalzen am Bodenbereich der Ballenformkammer im Anschluss an den Mündungsbereich des Zuführkanals erreicht werden kann.

Erfindungsgemäß sind die zumindest zwei Starterwalzen an einem unteren Randbereich der Ballenformkammer angrenzend an den Zuführkanal angeordnet, insbesondere hintereinander entlang des Umfangs der Ballenformkammer, wenn diese beim maximalem Kammerdurchmesser betrachtet wird, derart, dass eine durch die Drehachsen der Starterwalzen gehende Ebene von dem Zuführkanal her leicht abschüssig in die Ballenkammer führt bzw. einen stumpfen Winkel zur Längsachse des Zuführkanals einschließt, beispielsweise im Bereich von 160° bis 180°, so dass das durch den Zuführkanal geförderte Pressgut nach Eintritt in die Ballenformkammer leicht abfällt bzw. eine bogenförmige Bahn beschreibt und in besagtem abschüssigen Pfadabschnitt von den Starterwalzen geführt und/oder angetrieben wird.

In Weiterbildung der Erfindung sind zumindest zwei Starterwalzen angetrieben, vorteilhafterweise mit gleich großer Drehgeschwindigkeit.

In Weiterbildung der Erfindung können auch an einem oberen Randabschnitt der Ballenformkammer angrenzend an den Zuführkanal zwei oder mehr Starterwalzen feststehend angeordnet sein, von denen vorteilhafterweise zumindest eine antreibbar ist. Diese am oberen Randbereich der Ballenformkammer angrenzend an den Zuführkanal vorgesehenen Starterwalzen können in Weiterbildung der Erfindung hintereinander entlang des Umfangs der Ballenformkammer bei maximalem Kammerdurchmesser angeordnet sein und/oder derart positioniert sein, dass eine durch die Drehachsen der Starterwalzen definierte Ebene näherungsweise senkrecht zur Längsachse des Zuführkanals steht.

Vorteilhafterweise können die genannten am oberen Randbereich vorgesehenen Starterwalzen vom Drehsinn her derart angetrieben sein, dass mit diesen Starterwalzen in Eingriff gelangendes Erntegut auf den Zuführkanal bzw. dessen Mündungsbereich quer zugefördert wird. Sind sowohl am unteren Randbereich als auch am oberen Randbereich der Ballenformkammer jeweils angrenzend an den Zuführkanal Starterwalzen vorgesehen, wird zumindest jeweils eine Starterwalze der jeweiligen Starterwalzengruppe, vorzugsweise alle Starterwalzen gleichsinnig angetrieben, insbesondere derart, dass durch den Zuführkanal in die Ballenformkammer gelangendes Pressgut zunächst von den Starterwalzen am unteren Randbereich vom Mündungsbereich des Zuführkanals weg gefördert und von dort bogen- bzw. polygonzugartig umgelenkt wird und schließlich von den Starterwalzen am oberen Randbereich erfasst und wieder auf die Starterwalzen am unteren Randbereich zugefördert wird.

Von den genannten Starterwalzen abgesehen kann die Ballenformkammer grundsätzlich unterschiedlich ausgebildet sein, beispielsweise weitere feststehend angeordnete Umlenk- und/oder Antriebswalzen umfassen, ggf. in Kombination mit lageveränderlich angeordneten Umlenk- und/oder Antriebsmitteln zum Umlenken und/oder Antreiben des Pressguts im Inneren der Ballenformkammer. In vorteilhafter Weiterbildung der Erfindung kann im Inneren der Ballenformkammer eine Umschlingungsvorrichtung mit einem endlos umlaufenden Umschlingungsmittel vorgesehen sein, welches über mehrere Umlenkrollen geführt ist und den zu formenden Ballen umschlingt. Das genannte Umschlingungsmittel kann hierbei ein endlos umlaufendes Band oder auch mehrere parallel laufende Bänder, alternativ oder zusätzlich aber auch zumindest eine Kette, zumindest eine Stabkette und/oder ein Seil oder dergleichen umfassen.

In vorteilhafter Weiterbildung der Erfindung kann das Umschlingungsmittel über zumindest zwei Umlenkrollen geführt sein, die an zwei separaten Spannarmen gelagert sind, die durch einen Stellaktor verstellt bzw. lageverändert werden können, um das umlaufende Umschlingungsmittel zu spannen und/oder hinsichtlich der Umlaufbahn zu verlagern, insbesondere dergestalt, dass ein Trum des Bands den immer größer werdenden Ballen umschlingt.

Um bei ungleichmäßigem Zustrom des Pressguts gleichermaßen eine ausreichende Verlagerung der Umlaufbahn und eine elastische Spannung des umlaufenden Umschlingungsmittels zu erreichen, kann in Weiterbildung der Erfindung vorgesehen sein, dass die beiden genannten Spannarme durch einen gemeinsamen Stellaktor miteinander verbunden und durch Betätigung dieses Stellaktors verstellt werden können, um das Umschlingungsmittel zu spannen und/oder zu verlagern. Die Betätigung der beiden Spannarme durch einen gemeinsamen, die Spannarme verbindenden Stellaktor ermöglicht einen Lageausgleich beider Spannarme bei gleichzeitiger Steuerung der Relativlage. Als Stellaktor kommen hierbei grundsätzlich verschiedene fremdenergiebetätigbare Stellaktoren in Betracht, insbesondere ein druckmittelbetätigbarer, beispielsweise hydraulisch arbeitender Stellzylinder, alternativ aber auch ein Spindeltrieb oder ein elektromotorischer Antrieb mit oder ohne zwischengeschaltete Getriebestufe.

Die genannten zumindest zwei Starterwalzen im feststehenden Teil der Ballenformkammer sind von dem genannten Umschlingungsmittel bzw. der Umschlingungsvorrichtung separat ausgebildet und stehen mit dem genannten Umschlingungsmittel vorteilhafterweise nicht in Eingriff. Gleichwohl sind die zumindest zwei Starterwalzen über ein Förderelement beispielsweise in Form eines Bands oder eines Riemens oder einer Band- bzw. Riemen- oder Kettenanordnung miteinander verbunden, wobei das genannte Förderelement endlos ausgebildet ist und um die Starterwalzen umläuft.

Um die antreibende Wirkung der Starterwalzen zu vergrößern, können die genannten Starterwalzen und/oder das vorgenannte, die Starterwalze verbindende Förderelement Mitnehmer in Form von Fördervorsprüngen, Sicken, Ausnehmungen oder einer reliefartigen Oberflächenstruktur besitzen. Die genannten als Mitnehmer wirkenden Konturelemente können hierbei auch einzeln oder in Kombination miteinander vorgesehen sein, beispielsweise dergestalt, dass Sicken und Vorsprünge miteinander kombiniert werden.

Dabei kann vorgesehen werden, die Mitnehmer an dem Rohrkorpus der Walze integral einstückig anzuformen und die Ausformung der Mitnehmer nicht durch Umformung eines an sich fertigen Rohrkorpus, sondern gleich bei der Formung des Rohrkorpus vorzunehmen. Vorteilhafterweise können die Mitnehmervorsprünge materialhomogen mit dem Rohrkorpus ausgebildet und naht- und übergangsfrei an den Rohrkorpus angeformt sein. Die genannten Mitnehmerelemente werden bei der Formung des Rohrkorpus mitgeformt und ausgebildet. Durch die gleichzeitige Formung von Mitnehmerelementen und Rohrkorpus können verschiedenste Mitnehmergeometrien ausgebildet werden, ohne dies durch zu geringe Rohrwandstärken oder Schwächungen im Übergangsbereich von Rohrkorpus zu Mitnehmerelementen erkaufen zu müssen.

Insbesondere kann der Übergangsbereich zwischen Mitnehmervorsprüngen und Rohrkorpus frei von Gefügeveränderungen ausgebildet werden. Während beim Anschweißen von Mitnehmerelementen ebenso wie beim Sickenpressen oder anderen das Material stark beanspruchenden Umformverfahren gerade im Wurzelbereich der Mitnehmerelemente typische Gefügeveränderungen auftreten, welche die Festigkeit im Übergangsbereich von Mitnehmer zu Rohrkorpus beeinflussen, kann durch das erfindungsgemäße materialhomogene Anformen der Mitnehmer gleich bei der Formung des Rohrkorpus eine solche Gefügeveränderung vermieden werden, so dass sich die Mikrostruktur des Materials homogen und frei von Unstetigkeitsstellen wie Nähten oder dergleichen vom Rohrkorpus in das Mitnehmerelement hinein und über den Übergangsbereich hinweg erstreckt und im Wesentlichen im gesamten Walzenkorpus gleichmäßig ausgebildet ist.

Die Ausbildung der Mitnehmerelemente kann je nach Form und Kontur der Mitnehmerelemente variieren. In vorteilhafter Weiterbildung der Erfindung können die Mitnehmerelemente durch spanende Bearbeitung eines zunächst in der Wandstärke ein Übermaß aufweisenden Rohrrohlings ausgebildet werden, wobei insbesondere die Bereiche zwischen Mitnehmervorsprüngen abgetragen werden, wobei hier hinsichtlich der möglichen Bearbeitungsverfahren diverse Möglichkeiten bestehen. Beispielsweise können Bereiche zwischen Mitnehmervorsprüngen durch Erudieren abgetragen werden. Alternativ oder zusätzlich können die Mitnehmerelemente und der Rohrkorpus in Weiterbildung der Erfindung auch durch Fräsen geformt werden, wobei vorteilhafterweise ein Rohrkorpusrohling mit zunächst gleich bleibender Wandstärke, die ausreichend dick bemessen ist, um die Mitnehmervorsprünge auszubilden, in den Bereichen zwischen den gewünschten Mitnehmervorsprüngen abgefräst wird. Hierdurch können nahezu beliebig geformte und konturierte Mitnehmervorsprünge erzeugt werden. Bei geeigneter Mitnehmerkonturierung können die genannten Mitnehmer und der Rohrkorpus auch durch Räumen, insbesondere durch räumende Bearbeitung eines zunächst in der Wandstärke ein Übermaß aufweisenden Rohrrohlings, geformt werden.

In Weiterbildung der Erfindung können die Mitnehmer und der Rohrkorpus auch durch Urformen erzeugt werden, insbesondere durch Strangpressen, wobei ggf. eine spanende Nachbearbeitung der vorgenannten Art erfolgen kann.

Die Mitnehmervorsprünge können grundsätzlich verschiedene Konturen besitzen, wobei an einer Walze auch mehrere Mitnehmerelemente mit voneinander abweichender Konturierung vorgesehen werden können. Die Mitnehmerelemente können beispielsweise in Form von gekrümmten oder gebogenen, rippenartigen Vorsprüngen ausgebildet sein, die in Umfangs- und/oder Längsrichtung des Rohrkorpus in einem Raster oder Muster verteilt angeordnet sein können. In bevorzugter Weiterbildung der Erfindung können die Mitnehmervorsprünge in Form von Längsrippen quer zur Umfangsrichtung des Rohrkorpus ausgebildet sein. Die Längsrippen können hierbei parallel zur Drehachse der Walze verlaufen. In alternativer Weiterbildung der Erfindung können die Längsrippen relativ zur Walzendrehachse bzw. zur Rohrkorpuslängsachse verdrillt sein bzw. einen Drall oder einen nicht geradlinigen Verlauf besitzen, sich beispielsweise in Form eines sehr flachen Gewindegangs erstrecken. Die Längsrippen können hierbei über die gesamte Längserstreckung des Rohrkorpus durchgängig ausgebildet sein. Alternativ oder zusätzlich zu einer solchen zumindest einen durchgängigen Längsrippe können auch unterbrochene oder nur sektorweise ausgebildete Längsrippen vorgesehen sein, beispielsweise dergestalt, dass rippenförmige Vorsprünge, der Länge nur ein Bruchteil der Rohrkorpuslänge beträgt, entlang einer sich über den Rohrkorpus erstreckenden Längsrippenlinie erstrecken.

Die Mitnehmerelemente können hinsichtlich ihrer Höhe und/oder Dicke variieren, wobei alle Mitnehmerelemente einer Walze dieselbe Höhe und/oder Dicke, aber auch unterschiedliche Höhen und/oder Dicken besitzen können. Bezogen auf die Wandstärke des Rohrkorpus außerhalb der Mitnehmerelemente, also in Rohrkorpussektoren, welche keine Mitnehmerelemente aufweisen, kann die Wandstärke der Walze im Bereich der Mitnehmerelemente 120% bis 300%, vorzugsweise etwa 150% bis 250% betragen. Beträgt die Wandstärke des Rohrkorpus außerhalb der Mitnehmer beispielsweise etwa 4 mm, können die Mitnehmer beispielsweise wiederum 4 mm überstehen, so dass im Bereich der Mitnehmer die gesamte Wandstärke 8 mm und damit etwa 200% beträgt, wobei dies nur beispielhaft zur Verdeutlichung der erzielbaren Mitnehmerkonturierungen genannt ist. Die Wandstärken des Rohrkorpus können variieren, insbesondere auch mehr als 4 mm, und zwar auch in Bereichen außerhalb der Mitnehmerelemente, betragen, um die notwendigen Festigkeiten zu erzielen.

Die vorliegende Erfindung wird nachfolgend anhand eines bevorzugten Ausführungsbeispiels und zugehöriger Zeichnungen näher erläutert. In den Zeichnungen zeigen:

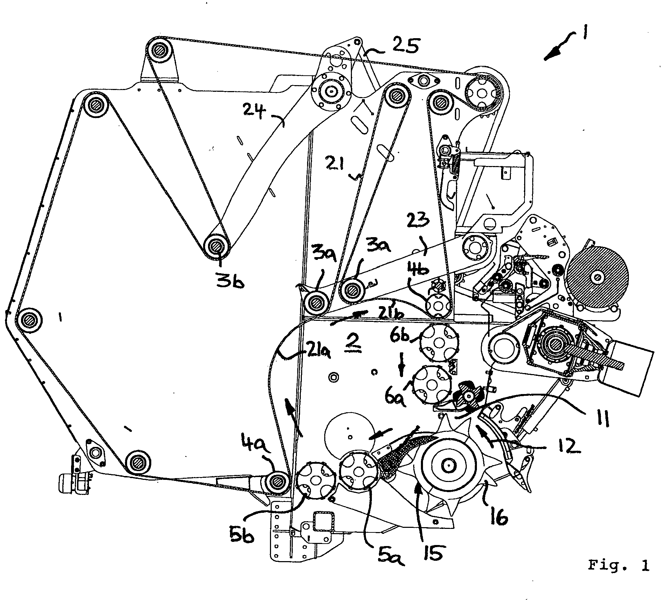

- Fig. 1:: eine schematische, teilweise geschnittene Seitenansicht einer Ballenpresse nach einer vorteilhaften Ausführung der Erfindung, wobei der Zuführkanal und die im Anschluss daran in der Ballenformkammer vorgesehenen mehreren Starterwalzen gezeigt sind und die Umschlingungsvorrichtung in einer Ausgangsstellung zu Anfang eines Ballenformvorgangs gezeigt ist, in der die Ballenformkammer eine trapezförmige Konturierung besitzt, und

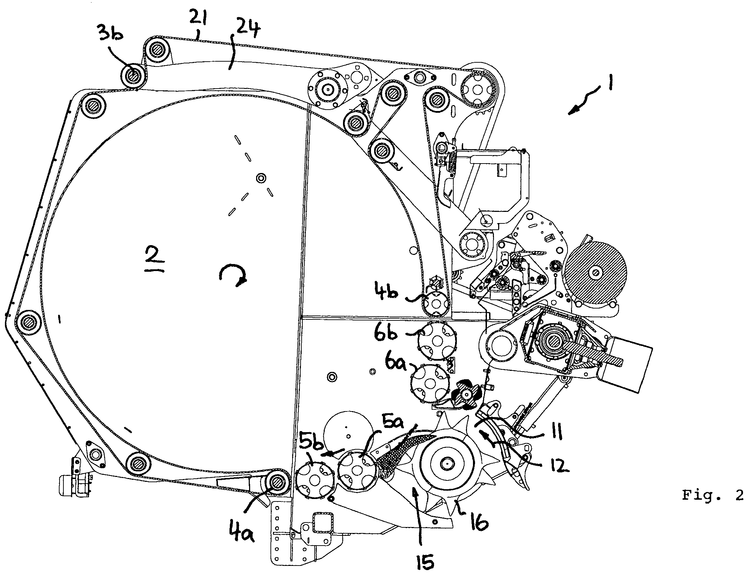

- Fig. 2:: eine schematische Seitenansicht der Ballenpresse ähnlich Fig. 1, wobei die Umschlingungsvorrichtung in einer Endstellung gegen Ende eines Ballenformvorgangs mit maximalem Kammerdurchmesser dargestellt ist.

Wie die Figuren zeigen, kann die Ballenpresse 1 zum Formen und/oder Verpressen von Erntegut zu Ballen eine im Durchmesser variable Ballenformkammer 2 aufweisen, die im Wesentlichen zylindrisch konturiert ist. Die genannte Ballenformkammer 2 kann hierbei über einen Zuführkanal 11 mit Pressgut beschickt werden, welcher Zuführkanal 11 an einem vorderen und/oder unteren Abschnitt der Ballenformkammer 2 in diese münden kann und, wie die Figuren zeigen, leicht bogenförmig ansteigend und/oder abfallend in die genannte Ballenformkammer 2 führen kann. Der genannte Zuführkanal 11 kann mit einer Förder- und Schneidvorrichtung 15 versehen sein, um das in die Ballenformkammer 2 geförderte Erntegut bzw. Pressgut durch den Zuführkanal 11 aktiv fördern und dabei zerschneiden zu können. Beispielsweise kann ein Förderrotor 16 vorgesehen sein, der sich mit Förderzinken in den genannten Zuführkanal 11 hinein erstreckt und mit einem ebenfalls in den Zuführkanal 11 hineinragenden Schneidwerk, welches eine Vielzahl an Messern umfassen kann, zusammenwirken kann. Stromauf des Zuführkanals 11 kann eine Aufnahmevorrichtung beispielsweise umfassend eine Pickup vorgesehen sein, um Erntegut vom Boden aufsammeln und in den Zuführkanal 11 übergeben zu können.

An einem Einlaufbereich der Ballenkammer 2 bzw. einem Mündungsbereich des genannten Zuführkanals 11 in die Ballenformkammer 2 hinein, oder in einem Übergangsbereich zwischen dem genannten Zuführkanal 11 und der Ballenformkammer 2 können mehrere Form- und/oder Presswalzen oder Starterwalzen 5 bzw. 6 vorgesehen sein, die mit dem in die Ballenformkammer 2 einlaufenden Pressgut in Eingriff gelangen. Wie Fig. 1 zeigt, können an einem unteren Randbereich der Ballenformkammer 2 angrenzend an die Mündung des Zuführkanals 11 zwei Starterwalzen 5a und 5b vorgesehen sein, die in Einlaufrichtung 12 des Ernteguts in die Ballenformkammer hinein hintereinander angeordnet sind. Die genannten Starterwalzen 5a und 5b sind hierbei entlang des Umfangs der Ballenformkammer 2 angeordnet, wenn man diese bei maximalem Kammerdurchmesser betrachtet, wie dies Fig. 2 zeigt. Dabei können die genannten Starterwalzen 5a und 5b einen leicht abschüssigen Einlauf in die Ballenformkammer 2 hinein definieren, d.h. eine weiter vom Zuführkanal 11 entfernte Starterwalze 5b kann etwas tiefer liegend angeordnet sein als eine näher am Zuführkanal 11 angeordnete Starterwalze 5a. Diese sukzessive abfallende Anordnung kann auch bei mehr als zwei Starterwalzen realisiert sein.

Wie die Figuren zeigen, sind weiterhin am oberen Randbereich der Ballenformkammer 2 angrenzend an die Mündung des Zuführkanals 11 zwei Starterwalzen 6a und 6b vorgesehen, die ebenfalls hintereinander entlang des Umfangs der Ballenformkammer 2 angeordnet sind, wenn die Ballenformkammer 2 bei maximalem Durchmesser betrachtet wird, vgl. Fig. 2.

Die genannten Starterwalzen 5 bzw. 6 können alle antreibbar ausgebildet sein, wobei die Starterwalzen 5 und 6 vorteilhafterweise gleichsinnig angetrieben werden insbesondere derart, dass durch den Zuführkanal 11 in die Ballenformkammer 2 gelangendes Pressgut zunächst von den unteren Starterwalzen 5 mitgenommen und in die Ballenformkammer hineingefördert wird. Das dann von der noch zu beschreibenden Umschlingungsvorrichtung übernommene, umgelenkte und weiter geförderte Pressgut gelangt sodann zu den oberen Starterwalzen 6, von denen es im Kreislauf zurück auf die unteren Starterwalzen 5 zu bzw. quer zum Mündungsbereich des Zuführkanals 11 mit dort nachströmendem Pressgut verbunden wird.

Die genannte Umschlingungsvorrichtung kann, wie die Figuren zeigen, ein endlos umlaufendes Umschlingungsmittel 21 in Form von einem oder mehreren Riemen umfassen, wobei zusätzlich oder anstelle der genannten Riemen jedoch auch eine entsprechend umlaufende Stabkette oder ähnliches als Umschlingungsmittel 21 vorgesehen sein kann. Das genannte Umschlingungsmittel 21 wird um diverse Umlenkrollen 3 und 4 umgelenkt und ggf. von diesen angetrieben, wobei zumindest eine der Umlenkrollen feststehend und zumindest eine weitere Umlenkrolle lageveränderlich angeordnet sein kann. Insbesondere wird das genannte Umschlingungsmittel 21 einerseits um zwei Umlenkrollen 4 umgelenkt, die feststehend neben den bzw. benachbart zu den Starterwalzen 5 und 6 angeordnet sind, so dass ein von diesen Umlenkrollen 4 jeweils ablaufendes Trum des Umschlingungsmittels 21 benachbart von den genannten Starterwalzen bzw. von deren Nähe aus abläuft und zusammen mit den genannten Starterwalzen 5 und 6 die Ballenformkammer begrenzt und einlaufendes Erntegut bzw. Pressgut umschlingt. Die Lage bzw. Richtung der ablaufenden Trume 21a und 21b des Umschlingungsmittels 21 wird durch weitere Umlenkrollen 3a gesteuert, welche an einem verstellbaren bzw. lageveränderbaren Spannarm 23 gelagert sind, welcher auf den Mündungsbereich des Zuführkanals 11 zu und von diesem weg verstellt werden kann. Beispielsweise kann der genannte Spannarm 23 um eine liegende Achse schwenkbar gelagert sein und/oder als Schwenkarm ausgebildet sein. Wie ein Vergleich der Figuren 1 und 2 zeigt, kann der genannte Spannarm 23 insbesondere derart verstellt werden, dass die genannten, daran vorgesehen Umlenkrollen 3a von einem Ausgangspunkt in einem beim Mündungsbereich des Zuführkanals 11 liegenden Sektors zu einem Endpunkt in der Nähe eines oberen Wandungs-abschnitts der Ballenformkammer 2 hin und her gefahren werden kann.

Um das umlaufende Umschlingungsmittel 21 hierbei nachführen bzw. Spannen zu können bzw. die hierdurch entstehende Längenänderung ausgleichen zu können, ist eine weitere verstellbare Umlenkrolle 3b vorgesehen, die an einem zweiten Spannarm 24 gelagert ist, welcher ebenfalls lageveränderbar ausgebildet ist, insbesondere derart, dass die daran vorgesehene Umlenkrolle 3b von einer Stellung im Zentrum der Ballenformkammer 2 zu einer Stellung am Rand der Ballenformkammer 2 hin und her gefahren werden kann, vgl. vergleichend die Figuren 1 und 2.

Der genannte zweite Spannarm 24 kann ebenfalls um eine liegende Achse schwenkbar gelagert sein und/oder als Schwenkarm ausgebildet sein. Die beiden genannten Spannarme 23 und 24 können grundsätzlich in verschiedener Weise vorgespannt und/oder betätigt werden, beispielsweise durch Beaufschlagung mit einer Federeinrichtung in Form einer mechanischen Feder oder einer Gasdruckfeder oder einer hydraulischen Vorspannung. Alternativ oder zusätzlich kann in Weiterbildung der Erfindung ein gemeinsamer Stellaktor 25 zur Vorspannung und/oder Betätigung der beiden Spannarme 23 und 24 vorgesehen sein, welcher Stellaktor 25 vorteilhafterweise die beiden Spannarme 23 und 24 miteinander verbindet und in ihren Bewegungen aneinander koppelt. Insbesondere kann als Stellaktor 25 hierbei ein Druckmittelzylinder vorgesehen sein, welcher durch Längenänderung die beiden Spannarme 23 und 24 relativ zueinander verstellt bzw. verschwenkt.

Wie Fig. 1 zeigt, kann die genannten Umschlingungsvorrichtung im Zusammenspiel mit den Starterwalzen 5 und 6 derart ausgebildet sein, dass in der Ausgangsstellung zu Beginn eines Ballenformvorgangs eine im Wesentlichen trapezförmige Ballenformkammer begrenzt wird, welche in Fig. 1 durch die vier im Kreis laufenden Pfeile verdeutlicht wird. Zwei Seiten dieser trapezförmigen Ballenformkammer werden hierbei durch die Trume 21a und 21b des Umschlingungsmittels 21 begrenzt, während zwei andere Seiten durch die genannten zwei Paare von Starterwalzen 5 und 6 begrenzt werden.

## Patentansprüche

1. Ballenpresse, mit einer teil- oder vollvariablen Ballenformkammer (2), in der halm- und/oder blattförmiges Erntegut oder ähnliches Pressgut zu Ballen form- und/oder pressbar ist, wobei der Ballenformkammer (2) durch einen in die Ballenformkammer (2) mündenden Zuführkanal (11), in dem eine Förder- und/oder Schneidvorrichtung (15) angeordnet ist, das Ernte- und/oder Pressgut zuführbar ist, wobei im Übergangsbereich von Zuführkanal (11) und Ballenformkammer (2) an einem unteren Randbereich der Ballenformkammer (2) angrenzend an den Zuführkanal (11) zumindest zwei in Einlaufrichtung des Ernteguts hintereinander angeordnete, feststehende Starterwalzen (5a, 5b) zum Starten der Ballenformung vorgesehen sind, von denen zumindest eine antreibbar ausgebildet ist, **dadurch gekennzeichnet, dass** die zumindest zwei Starterwalzen (5a, 5b) über ein Förderelement, das endlos ausgebildet ist und um die Starterwalzen (5a, 5b) umläuft, miteinander verbunden sind.

2. Ballenpresse nach dem vorhergehenden Anspruch, wobei die zumindest zwei Starterwalzen (5a, 5b) an dem unteren Randbereich der Ballenformkammer (2) angrenzend an den Zuführkanal (11) hintereinander entlang des Umfangs der Ballenformkammer (2) bei maximalem Kammerdurchmesser derart angeordnet sind, dass eine durch die Drehachsen der Starterwalzen (5a, 5b) definierte Ebene abschüssig in die Ballenformkammer (2) hineinführt und/oder stumpf- oder spitzwinklig zur Längsachse (12) des Zuführkanals (11) geneigt ist.

3. Ballenpresse nach einem der vorhergehenden Ansprüche, wobei zwei weitere Starterwalzen (6a, 6b) an einem oberen Randbereich der Ballenformkammer (2) angrenzend an den Zuführkanal (11) angeordnet sind, vorzugsweise hintereinander entlang des Umfangs der Ballenformkammer (2) bei maximalem Kammerdurchmesser und/oder derart, dass eine durch die Drehachsen der Starterwalzen (6a, 6b) definierte Ebene etwa senkrecht zur Längsachse des Zuführkanals (11) steht.

4. Ballenpresse nach den vorhergehenden Anspruch wobei die Starterwalzen (5a, 5b) am unteren Randbereich der Ballenformkammer (2) und die Starterwalzen (6a, 6b) am oberen Randbereich der Ballenformkammer (2) gleichsinnig umlaufend antreibbar sind derart, dass durch den Zuführkanal (11) zugeführtes Ernte- oder Pressgut zunächst von den Starterwalzen (5a, 5b) am unteren Randbereich der Ballenformkammer (2) mitgenommen und später von den Starterwalzen (6a, 6b) am oberen Randbereich der Ballenformkammer umgelenkt und/oder mitgenommen wird.

5. Ballenpresse nach einem der vorhergehenden Ansprüche, wobei die Ballenformkammer (2) eine Umschlingungsvorrichtung mit einem endlos umlaufenden Umschlingungsmittel (21) aufweist, welches über mehrere Umlenkrollen (3, 4) geführt ist und den zu formenden Ballen umschlingt, wobei die genannten Starterwalzen (5, 6) außer Eingriff von dem Umschlingungsmittel stehen und separat von der Umschlingungsvorrichtung vorgesehen sind.

6. Ballenpresse nach dem vorhergehenden Anspruch, wobei das Umschlingungsmittel (21) über zumindest zwei Umlenkrollen (3a, 4a) geführt ist, die an zwei separaten Spannarmen (23, 24) gelagert sind, welche Spannarme (23, 24) durch einen gemeinsamen Stellaktor (25) vorzugsweise in Form eines Hydraulikzylinders miteinander verbunden und zum Spannen des Umschlingungsmittels (21) betätigbar sind.

7. Ballenpresse nach dem vorhergehenden Anspruch, wobei die Starterwalzen (5) und/oder das die Starterwalzen (5) verbindende Förderelement Mitnehmer in Form von Fördervorsprüngen, Sicken, Ausnehmungen oder einer reliefartigen Oberflächenstruktur aufweisen.

8. Ballenpresse nach einem der vorhergehenden Ansprüche, wobei auf gegenüberliegenden Seiten, insbesondere oberhalb und unterhalb, des Mündungsbereichs des Zuführkanals (11) in die Ballenformkammer (2) jeweils ein Paar Starterwalzen (5, 6) vorgesehen und derart angeordnet sind, dass von den Starterwalzen (5, 6) zueinander stumpf- oder spitzwinklig angeordnete Seiten der Ballenformkammer (2) gebildet werden.

9. Ballenpresse nach einem der vorhergehenden Ansprüche 5-7 wobei die Ballenformkammer (2) hinsichtlich ihrer den Ballen begrenzenden Umfangsseiten vollvariabel oder teilvariabel ausgebildet ist und in einer Ausgangskonfiguration zu Beginn eines Ballenformvorgangs eine trapezförmige Formkammer besitzt, die an zumindest einer Seite, vorzugsweise an zwei Seiten, von den genannten Starterwalzen (5, 6) und an zwei weiteren Seiten von der genannten Umschlingungsvorrichtung begrenzt wird.

10. Ballenpresse nach dem vorhergehenden Anspruch, wobei die Umschlingungsvorrichtung feststehende Umlenkrollen (4) zur Umlenkung des umlaufenden Umschlingungsmittels (21) aufweist, von welchen feststehenden Umlenkrollen (4) eine Umlenkrolle (4a) neben einem unteren Starterwalzenpaar (5) und eine andere Umlenkrolle (4b) neben einem oberen Starterwalzenpaar (6) angeordnet ist, wobei ein weiteres Umlenkrollenpaar (3a, 3b) an einem verstellbaren Spannarm (23) vorgesehen ist, der von dem Mündungsbereich des Zuführkanals (11) weg und auf diesen Mündungsbereich zu verstellbar ist, wobei die beiden genannten Umlenkrollen (3a, 3b) an dem genannten Spannarm (23) zur Umlenkung und/oder Führung jeweils eines Trums des Umschlingungsmittels (21) vorgesehen sind derart, dass in einer Ausgangsstellung des Spannarms (23) zu Beginn eines Ballenformvorgangs und dem davon geführten Umschlingungsmittel (21) zusammen mit den genannten beiden Paaren von Starterwalzen (5, 6) die trapezförmige Formkammer begrenzt wird.

11. Ballenpresse nach einem der vorhergehenden Ansprüche, wobei die Formkammer zu Beginn eines Ballenformvorgangs ein Volumen von weniger als 25%, vorzugsweise etwa 10% bis 25%, des maximalen Volumens der Formkammer am Ende eines Ballenformvorgangs aufweist.

12. Ballenpresse nach einem der vorhergehenden Ansprüche, wobei zumindest eine der Starterwalzen (5, 6) mit einem im Wesentlichen zylindrischen Rohrkorpus versehen ist, an dessen Außenumfangsfläche Mitnehmerelemente insbesondere in Form von Mitnehmervorsprüngen vorgesehen sind, wobei die Mitnehmerelemente materialhomogen mit dem Rohrkorpus ausgebildet und naht- sowie übergangsfrei an den Rohrkorpus angeformt sind.

13. Ballenpresse nach dem vorhergehenden Anspruch, wobei ein Übergangsbereich zwischen Mitnehmerelementen und Rohrkorpus frei von Gefügeveränderungen ausgebildet ist.

14. Ballenpresse nach einem der vorhergehenden Ansprüche, wobei die Mitnehmerelemente in Form von Längsrippen quer zur Umfangsrichtung des Rohrkorpus ausgebildet sind, wobei vorzugsweise die Längsrippen relativ zur Rohrkorpuslängsachse verdrillt sind und/oder einen nicht geradlinigen Verlauf besitzen.

## Claims

1. Baling press comprising a partially or fully variable bale forming chamber (2), in which a stalk-like or leave-shaped harvested crop or similar pressing material can be formed and/or pressed into bales, wherein the bale forming chamber (2) can be supplied with the harvested crop and/or pressing material through a supply channel (11), in which a supply and/or cutting device (15) is arranged and which opens into the bale forming chamber (2), wherein in the transition region between the supply channel (11) and the bale forming chamber (2) at a lower edge region of the bale forming chamber (2) adjacent to the supply channel (11), at least two starter rollers (5a, 5b) arranged one behind the other in the feed direction of the harvested crop for starting the bale shaping are provided, at least one of which is configured to be drivable, **characterized in that** the at least two starter rollers (5a, 5b) are connected to one another via a supply element of endless configuration and that revolves around the starter rollers (5a, 5b).

2. Baling press according to the preceding claim, wherein the at least two starter rollers (5a, 5b) are arranged at the lower edge region of the bale forming chamber (2) adjacent to the supply channel (11) one behind the other along the periphery of the bale forming chamber (2) at a maximum chamber diameter in such a way that a plane defined by the axes of rotation of the starter rollers (5a, 5b) leads down into the bale forming chamber (2) and/or is inclined at a obtuse or acute angle with respect to the longitudinal axis (12) of the supply channel (11).

3. Baling press according to one of the preceding claims, wherein two further starter rollers (6a, 6b) are arranged at an upper edge region of the bale forming chamber (2) adjacent to the supply channel (11), preferably one behind the other along the periphery of the bale forming chamber (2) at the maximum chamber diameter and/or in such a way that a plane defined by the axes of ration of the starter rollers (6a, 6b) is approximately perpendicular to the longitudinal axis of the supply channel (11).

4. Baling press according to the preceding claim, wherein the starter rollers (5a, 5b) at the lower edge region of the bale forming chamber (2) and the starter rollers (6a, 6b) at the upper edge region of the bale forming chamber can be circumferentially driven in the dame direction in such a way that harvested crop and/or pressing material supplied through the supply channel (11) is first carried along by the starter rollers (5a, 5b) at the lower edge region of the bale forming chamber (2) and later deflected and/or carried along by the starter rollers (6a, 6b) at the upper edge region of the bale forming chamber.

5. Baling press according to one of the preceding claims, wherein the bale forming chamber (2) comprises a looping device having an endless looping means (21), which is guided via multiple deflection rollers (3, 4) and loops around the bale to be formed, wherein the named starter rollers (5, 6) are not engaged with the looping means and are provided separate from the looping device.

6. Baling press according to the preceding claim, wherein the looping means (21) is guided via at least two deflection rollers (3a, 4a), which are mounted on two separate tensioning arms (23, 34), which tensioning arms (23, 24) are connected to one another by a common actuator (25) preferably in the form of a hydraulic cylinder and which can be actuated for tensioning the looping means (21).

7. Baling press according to the preceding claim, wherein the starter rollers (5) and/or supply element connecting the starter rollers (5) comprises catchers in the form of supply protrusions, fins, recesses or a relief-like surface structure.

8. Baling press according to one of the preceding claims, wherein on opposite sides, in particular above and below the mouth region of the supply channel (11) into the bale forming chamber (2) in each case one pair of starter rollers (5, 6) is provided and arranged in such a way that sides of the bale forming chamber (2) arranged at an obtuse or acute angle to one another from the starter rollers (5, 6) are formed.

9. Baling press according to one of the preceding claims 5 to 7, wherein the bale forming chamber (2) is formed to be fully variable or partially variable with respect to the peripheral sides limiting the bale and has a trapezoid forming chamber at the start of the bale forming process, which is limited on at least one side, preferably on two sides, by the named starter rollers (5, 6) and on two further sides by the named looping device.

10. Baling press according to the preceding claim, wherein the looping device comprises fixed deflection rollers (4) for deflecting the revolving looping means (21), of which fixed deflection rollers (4) one deflection roller (4a) is arranged next to a lower starter roller pair (5) and another deflection roller (4b) is arranged next to an upper starter roller pair n(6), wherein a further deflection roller pair (3a, 3b) is provided on an adjustable tensioning arm (23), which can be adjusted away from the mouth region of the supply channel (11) and toward this mouth region, wherein the two named deflection rollers (3a, 3b) are provided on the named tensioning arm (23) for deflecting and/or guiding in each case one strand of the looping means (21) in such a way that the trapezoid forming chamber is limited in an initial position of the tensioning arm (23) at the start of a bale forming process by the looping means (21) guided thereby together with the named two pairs of starter rollers (5, 6).

11. Baling press according to one of the preceding claims, wherein the forming chamber, at the start of the bale forming process, has a volume of less than 25 %, preferably approximately 10 % to 25 %, of the maximum volume of the forming chamber at the end of a bale forming process.

12. Baling press according to one of the preceding claims, wherein at least one of the starter rollers (5, 6) is provided with an essentially cylindrical pipe body, at the outer circumference of which catcher elements in particular in the form of catcher protrusions are provided, wherein the catcher elements are formed materially homogenous with the pipe body and formed to the pipe body without seam and transition.

13. Baling press according to the preceding claim, wherein a transition region between catcher elements and pipe body is formed to be free from a change in structure.

14. Baling press according to one of the preceding claims, wherein the catcher elements are formed in the form of longitudinal ribs transversally to the circumferential direction of the pipe body, wherein preferably the longitudinal ribs are twisted relative to the longitudinal axis of the pipe body and/or have a non-straight profile.

## Revendications

1. Presse à balles comprenant une chambre de formation de balles (2) partiellement ou totalement variable, dans laquelle un produit récolté, en forme de tige ou de feuille, ou un produit pressé similaire peut être pressé en balles en étant mis en forme et/ou pressé, le produit récolté et/ou le produit pressé pouvant être amenés à la chambre de formation de balles (2) à travers un canal d'alimentation (11) aboutissant dans la chambre de formation de balles (2), dans lequel canal d'alimentation est disposé un dispositif de transport et/ou de coupe (15), au moins deux rouleaux de démarrage (5a, 5b) stationnaires, disposés dans le sens d'entrée du produit récolté étant ménagés pour démarrer la formation des balles dans la zone de transition du canal d'alimentation (11) et de la chambre de formation de balles (2) sur une zone de bord inférieure de la chambre de formation de balles (2) de manière adjacente au canal d'alimentation (11), dont au moins un est réalisé de manière entraînable, **caractérisée en ce que** les au moins deux rouleaux de démarrage (5a, 5b) sont reliés entre eux par l'intermédiaire d'un élément de transport qui est réalisé de manière continue et circule autour des rouleaux de démarrage (5a, 5b).

2. Presse à balles selon la revendication précédente, les au moins deux rouleaux de démarrage (5a, 5b) étant disposés l'un derrière l'autre le long de la circonférence de la chambre de formation de balles (2), avec un diamètre de chambre maximal, sur la zone de bord inférieure de la chambre de formation de balles (2) de manière adjacente au canal d'alimentation (11), de façon à ce qu'un plan défini par les axes de rotation des rouleaux de démarrage (5a, 5b) conduise en pente dans la chambre de formation de balles (2) et soit à angle obtus ou aigu par rapport à l'axe longitudinal (12) du canal d'alimentation (11).

3. Presse à balles selon l'une quelconque des revendications précédentes, deux rouleaux de démarrage (6a, 6b) supplémentaires étant disposés sur une zone de bord supérieure de la chambre de formation de balles (2) de manière adjacente au canal d'alimentation (11), de préférence l'un derrière l'autre le long de la circonférence de la chambre de formation de balles (2) avec un diamètre de chambre maximal et/ou de manière à ce qu'un plan défini par les axes de rotation des rouleaux de démarrage (6a, 6b) soit approximativement perpendiculaire à l'axe longitudinal du canal d'alimentation (11).

4. Presse à balles selon la revendication précédente, les rouleaux de démarrage (5a, 5b) sur la zone de bord inférieure de la chambre de formation de balles (2) et les rouleaux de démarrage (6a, 6b) sur la zone de bord supérieure de la chambre de formation de balles (2) étant entraînables de manière continue dans le même sens de manière à ce que le produit récolté ou pressé amené à travers le canal d'alimentation (11) soit d'abord pris sur la zone de bord inférieure de la chambre de formation de balles (2) et ensuite dévié et/ou pris par les rouleaux de démarrage (6a, 6b) sur la zone de bord supérieure de la chambre de formation de balles (2).

5. Presse à balles selon l'une quelconque des revendications précédentes, la chambre de formation de balles (2) présentant un dispositif d'enroulement comprenant un moyen d'enroulement (21) circulant de manière continue, lequel est guidé par l'intermédiaire de plusieurs poulies de renvoi (3, 4) et entoure la balle à former, lesdits rouleaux de démarrage (5, 6) étant désengagés du moyen d'enroulement et étant ménagés de manière séparée du dispositif d'enroulement.

6. Presse à balles selon la revendication précédente, le moyen d'enroulement (21) étant guidé par l'intermédiaire d'au moins deux poulies de renvoi (3a, 4a) qui sont logées sur deux bras de serrage (23, 24) séparés, lesquels bras de serrage (23, 24) sont reliés entre eux au moyen d'un actionneur de réglage (25) commun de préférence sous forme d'un vérin et sont actionnables pour serrer le moyen d'enroulement (21).

7. Presse à balles selon la revendication précédente, les rouleaux de démarrage (5) et/ou l'élément de transport reliant les rouleaux de démarrage (5) présentant des entraîneurs sous forme de saillies de transport, de nervures, d'évidements ou d'une structure de surface en relief.

8. Presse à balles selon l'une quelconque des revendications précédentes, respectivement une paire de rouleaux de démarrage (5, 6) étant ménagée sur des côtés opposés, notamment au-dessus et en dessous de la zone d'embouchure du canal d'alimentation (11) dans la chambre de formation de balles (2) et étant disposée de manière à ce que des côtés de la chambre de formation de balles (2), disposés en angle aigu ou obtus l'un par rapport à l'autre, soient formés par les rouleaux de démarrage (5, 6).

9. Presse à balles selon l'une quelconque des revendications 5 à 7, la chambre de formation de balles (2), en ce qui concerne ses côtés circonférentiels délimitant les balles, étant réalisée de manière totalement variable ou partiellement variable et possédant dans une configuration initiale au début de l'opération de formation de balles une forme de chambre trapézoïdale, laquelle, sur au moins un côté, de préférence sur deux côtés, est délimitée par lesdits rouleaux de démarrage (5, 6) et sur deux autres côtés par ledit dispositif d'enroulement.

10. Presse à balles selon la revendication précédente, le dispositif d'enroulement présentant des poulies de renvoi (4) stationnaires pour la déviation du moyen d'enroulement (21) continu, desquelles poulies de renvoi (4) stationnaires une poulie de renvoi (4a) est disposée à côté d'une paire de rouleaux de démarrage (5) inférieurs et une autre poulie de renvoi (4b) est disposée à côté d'une paire de rouleaux de démarrage (6) supérieurs, une autre paire de poulies de renvoi (3a, 3b) étant ménagée sur un bras de serrage (23) réglable, lequel est réglable en s'éloignant de la zone d'embouchure du canal d'alimentation (11) et en direction de cette zone d'embouchure, les deux dites poulies de renvoi (3a, 3b) sur ledit bras de serrage (23) étant ménagées pour renvoyer et/ou guider respectivement un brun du moyen d'enroulement (21) de manière à ce que dans une position initiale du bras de serrage (23) au début d'une opération de formation de balle et du moyen d'enroulement (21), qui en est guidé avec les deux dites paires de rouleaux de démarrage (5, 6) la chambre de formation trapézoïdale soit délimitée.

11. Presse à balles selon l'une quelconque des revendications précédentes, la chambre de formation de balles au début d'une opération de formation de balles présentant un volume de moins de 25%, de préférence d'environ 10% à 25% du volume maximum de la chambre de formation à la fin d'une opération de formation de balles.

12. Presse à balles selon l'une quelconque des revendications précédentes, au moins un des rouleaux de démarrage (5, 6) étant ménagé avec un corps tubulaire essentiellement cylindrique, sur la surface circonférentielle extérieure duquel des éléments d'entraînement sont ménagés, notamment sous forme de saillies d'entraînement, les éléments d'entraînement étant réalisés en matière homogène avec le corps tubulaire et étant formés sans joint et sans transition sur le corps tubulaire.

13. Presse à balles selon la revendication précédente, une zone de transition étant réalisée entre les éléments d'entraînement et le corps tubulaire en étant exempte de changements de structure.

14. Presse à balles selon l'une quelconque des revendications précédentes, les éléments d'entraînement étant réalisés sous forme de nervures longitudinales transversales au sens circonférentiel du corps tubulaire, de préférence les nervures longitudinales étant torsadées et possédant une allure non rectiligne.
